# FASCICULE DE BREVET EUROPEEN

(11) **EP 1 632 337 B1**
(45) Date de publication et mention de la délivrance du brevet: **13.10.2010**
(21) Numéro de dépôt: 05291756.4
(22) Date de dépôt: 19.08.2005
(51) Int. Cl.: B29D 35/00, B29D 35/14, A43B 13/24

(54) **Semelle de chaussure tri-matière, procédé de fabrication et dispositif de fabrication**
Schuhsolhle aus drei Materialien, Herstellungsverfahren und -vorrichtung
Three material shoe sole, manufacturing process and manufacturing machine

(30) Priorité: 03.09.2004 FR 0409352
(43) Date de publication de la demande: 08.03.2006
(73) Titulaire: Sperian Protection Europe, 93420 Villepinte (FR)
(72) Inventeur: Didier, Jean-Francois, 26000 Valence (FR); Velata, Jean, 26100 Romans (FR)
(74) Mandataire: Debay, Yves

(56) Documents cités:
- EP-A- 1 205 121
- BE-A- 426 019
- FR-A- 2 742 637
- GB-A- 1 197 727
- US-A1- 2003 070 321

## Description

La présente invention concerne une semelle de chaussure tri-matière, le procédé de fabrication de la semelle et le dispositif de fabrication. La présente invention porte plus particulièrement sur une semelle inférieure tri-matière notamment pour chaussure de sécurité.

Il est connu dans l'art antérieur des semelles de chaussure comportant soit un système de stabilisation de la semelle sur le sol, soit un système d'absorption de chocs de la chaussure, soit un système souple d'adhérence au sol, soit un système comportant des moyens d'agrippement. Aucun des documents de l'art antérieur ne propose tous ces éléments combinés sur une même semelle extérieure de contact.

Un brevet européen EP 0548475 décrit une semelle de chaussure de sport comprenant une couche externe dite de contact qui a pour caractéristique d'être souple, adhérente au sol et de résister à l'abrasion. La couche de contact est constituée d'au moins trois zones de même matière et de même dureté inférieure à 45 shore D. Une première zone principale permet l'accroche mécanique sur le sol, elle est située sur la périphérie de la semelle. Une deuxième zone permet le maintien et l'adhérence de la chaussure sur le sol située plus particulièrement sur une partie avant et au milieu de la chaussure. Une troisième zone est dite neutre et se situe sur le talon de la chaussure. Ce brevet ne propose pas une zone d'absorption de chocs sur une partie de la couche de contact, plus particulièrement au talon et ne propose pas non plus un moyen d'agrippement situé sur la semelle extérieure sous la voûte plantaire permettant à une personne montant sur les barreaux d'une échelle de ne pas glisser.

Pour pallier au premier inconvénient concernant l'élément d'absorption de chocs, plusieurs brevets proposent des éléments d'absorption de chocs à disposer sur le talon de la chaussure. Par exemple, le brevet coréen KR 2002096148, propose un air bag de la chaussure comportant un coussin d'air monté dans le talon de la chaussure. Un brevet américain US 2003/150133 propose un système d'absorption de chocs disposé à l'intérieur du talon comportant deux chambres, une interne et respectivement une externe. Ces brevets ne divulguent pas d'éléments d'agrippement disposés sur la cambrure de la chaussure.

Pour pallier cet inconvénient, certains brevets, adaptés plus particulièrement à des chaussures de sport, proposent des crampons d'agrippement au sol, sur le patin avant de la chaussure. Ces crampons sont de manière générale pointus et/ou rigides.

Les document FR 2 742 637 et FR 2 754 982 décrivent une semelle de chaussure et un procédé de fabrication d'une semelle inférieure de chaussure qui servent de base aux revendications 1 et 10.

Si l'on combinait tous les éléments connus de l'art antérieur pour réaliser une semelle extérieure telle que proposée dans la présente invention, le procédé de fabrication de cette semelle extérieure nécessiterait plusieurs étapes de fabrication sur différents procédés de fabrication avec différentes matières à utiliser pour la fabrication de la semelle.

La présente invention a pour but de pallier certains inconvénients de l'art antérieur en proposant une semelle extérieure notamment pour chaussure de sécurité comportant des matières permettant un procédé de fabrication identique pour l'obtenir, tout en supportant le contact avec des produits à base d'hydrocarbures.

Ce but est atteint par une semelle de chaussure comportant une semelle inférieure et une semelle supérieure, la semelle supérieure étant une semelle de confort, la semelle inférieure comportant un talon, une cambrure et un patin avant, la semelle étant caractérisée en ce que la semelle inférieure comprend :
- un élément périphérique de grande stabilité et de maintien du pied disposé sur la périphérie de la cambrure, du patin avant et du talon,
- un élément d'absorption des chocs disposé dans un évidement formé sur le milieu du talon entouré de l'élément périphérique,
- un élément de grippage, de types crampons, disposé sur le milieu de la cambrure de la semelle entouré de l'élément périphérique,
- et un élément d'adhérence assurant l'adhérence au sol disposé sur le milieu du patin avant et entre les crampons de la cambrure de la semelle,
ces quatre éléments étant solidairement liés les uns aux autres par un procédé de vulcanisation.

Selon une autre particularité, l'élément périphérique, l'élément d'adhérence et l'élément d'absorption sont chacun constitués d'une matière élastique, de type caoutchouc nitrile avec une dureté différente pour chaque élément.

Selon une autre particularité, l'élément périphérique est constitué d'une matière élastique, de type caoutchouc nitrile, de dureté supérieure proche de 70shore.

Selon une autre particularité, l'élément d'adhérence est constitué d'une matière élastique, de type caoutchouc nitrile, de faible dureté proche de 60shore, permettant une bonne adhérence de la semelle sur tout type de sols et de revêtement.

Selon une autre particularité, l'élément d'absorption est constitué d'une matière élastique, de type caoutchouc nitrile, de faible dureté proche de 65shore.

Selon une autre particularité, l'élément de grippage est constitué d'une matière élastique.

Selon une autre particularité, le patin avant comprend des motifs engendrés par des nervures transversales espacées les unes des autres à égale distance et des nervures longitudinales espacées les unes des autres à égale distance, chaque extrémité des nervures étant ouverte sur l'extérieur de la semelle et chaque nervure formant des angles vifs avec la semelle permettant d'éviter d'emmagasiner du fluide afin de mieux adhérer au sol.

Selon une autre particularité, le milieu de la cambrure de la semelle comporte l'élément de grippage comportant au moins deux plots de crampons faisant saillie vers l'extérieur de la chaussure, en retrait du talon et du patin avant de la semelle inférieure.

Selon une autre particularité, le talon comprend l'élément d'absorption entouré de l'élément périphérique de la semelle, l'élément d'absorption comportant des boudins transversaux en retrait par rapport à l'élément périphérique qui comporte, lui, des plots rectangulaires placés à égale distance les uns des autres et de chaque côté de l'élément d'absorption.

Un second but est de proposer un procédé palliant certains inconvénients de l'art antérieur.

Ce second but est atteint par un procédé de fabrication d'une semelle inférieure de chaussure à partir d'un ensemble de moulage comportant un moule, une grille et un couvercle, le procédé étant caractérisé en ce qu'il comprend les étapes suivantes :
- insertion d'un élément de grippage dans un évidement du moule et remplissage respectivement dans chaque évidement du moule et de la grille d'une ébauche de matière élastique flasque à mouler de type caoutchouc, les ébauches étant de matière identique, mais de composition adéquate différente,
- fermeture de l'ensemble de moulage comportant le moule, la grille et le couvercle,
- pré-vulcanisation de l'ensemble de moulage pour former les éléments principaux de la semelle inférieure,
- ouverture de l'ensemble de moulage,
- épluchage d'évidements centraux formés sur un élément périphérique de la semelle inférieure formée après pré-vulcanisation dans l'évidement du moule et mise en place d'un élément d'adhérence et d'un élément d'absorption dans les évidements épluchés de l'élément périphérique inséré dans l'évidement du moule, l'élément d'adhérence et l'élément d'absorption étant formés dans les évidements de la grille lors de la pré-vulcanisation,
- fermeture de l'ensemble de moulage constitué du couvercle et du moule dont l'évidement comporte l'élément de grippage, l'élément périphérique, l'élément d'adhérence et l'élément d'absorption,
- vulcanisation de l'ensemble de moulage pour lier l'élément périphérique, l'élément de grippage, l'élément d'absorption des chocs et l'élément d'adhérence ensemble.

Selon une autre particularité, l'étape de chargement des différents évidements de l'ensemble de moulage comprend les étapes suivantes :
- insertion dans un évidement du moule, étant en forme d'empreinte correspondant à la semelle inférieure, de l'élément de grippage constitué d'une plaque prédécoupée comportant sur sa face inférieure des crampons et disposée au niveau de la cambrure de l'empreinte et remplissage dans ledit évidement d'une ébauche de matière élastique flasque à mouler, pour former, après pré-vulcanisation, l'élément périphérique de la semelle inférieure ayant une forte dureté,
- remplissage dans un premier évidement de la grille, étant en forme d'empreinte correspondant à l'élément d'adhérence du patin avant de la semelle inférieure, d'une ébauche de matière élastique flasque à mouler pour former, après pré-vulcanisation, un élément d'adhérence au sol ayant une faible dureté et remplissage dans un deuxième évidement de la grille, étant en forme d'une empreinte correspondant à l'élément d'absorption de chocs du talon de la semelle inférieure, d'une ébauche de matière élastique flasque à mouler pour former, après pré-vulcanisation, un élément d'absorption des chocs de faible dureté.

Selon une autre particularité, l'étape d'épluchage permet de gratter la matière élastique formée, après l'étape de pré-vulcanisation, de l'élément périphérique de la semelle inférieure disposée dans l'évidement du moule, la matière élastique étant grattée sur la zone placée au milieu du patin et au milieu de la cambrure entre des crampons de l'élément de grippage pour ensuite accueillir l'élément d'adhérence de la semelle inférieure et sur la zone placée au milieu du talon pour ensuite accueillir l'élément d'absorption de la semelle inférieure.

Selon une autre particularité, l'étape de chargement des éléments de la grille vers les zones épluchées du moule comprend les étapes suivantes :
- déplacement de l'élément d'adhérence du premier évidement de la grille vers un premier évidement formé sur l'élément périphérique inséré dans le moule, l'évidement correspondant au milieu du patin se prolongeant sur le milieu de la cambrure entre les crampons de l'élément de grippage, et
- déplacement de l'élément d'absorption du second évidement de la grille vers un deuxième évidement formé sur l'élément périphérique inséré dans le moule, ledit deuxième évidement correspondant au milieu du talon.

D'autres particularités et avantages de la présente invention apparaîtront plus clairement à la lecture de la description ci-après, faite en référence aux dessins annexés, dans lesquels :
- la figure 1A représente une vue de face représentative de la semelle selon un mode de réalisation de la présente invention ;
- la figure 1B représente une vue en coupe de face représentative de la semelle inférieure selon un mode de réalisation de la présente invention ;
- la figure 2 représente une vue de profil représentative du dessous de la semelle inférieure selon un mode de réalisation de la présente invention ;
- la figure 3 représente un schéma représentatif de l'ensemble de moulage ne formant par partie de la présente invention ;
- la figure 4A représente une vue de profil de l'élément périphérique et de l'élément de grippage composant la semelle inférieure de la présente invention ;
- la figure 4B représente une vue de profil de l'élément d'adhérence et de l'élément d'absorption composant la semelle inférieure de la présente invention ;
- la figure 5 représente un schéma logique représentatif du procédé de fabrication d'une semelle selon un mode de réalisation de la présente invention.

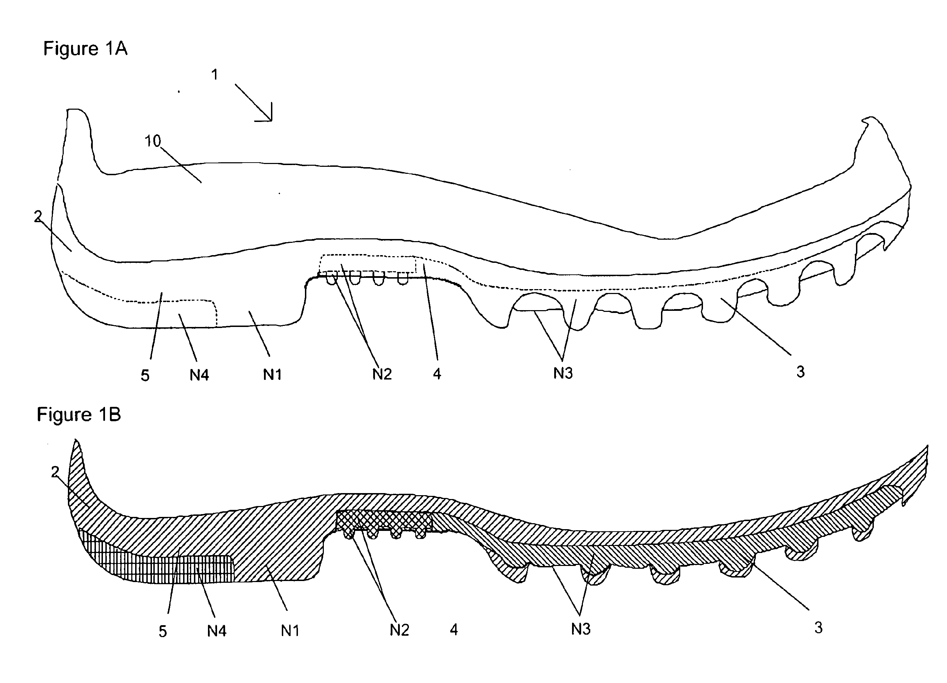

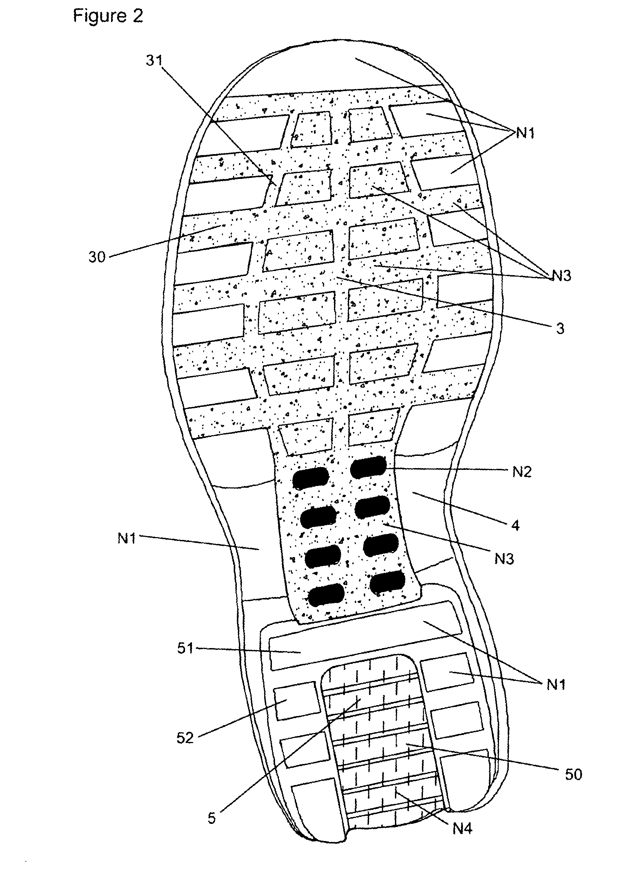

La semelle de la présente invention va maintenant être décrite en relation avec les figures 1A, 1B, 2, 4A et 4B. La semelle de la chaussure (1) représentée en figure 1 comporte une semelle supérieure (10) dite de confort et une semelle inférieure (2) dite de contact. La semelle supérieure (10) est constituée de matière de type polyuréthane permettant un confort et une légèreté maximale. La semelle inférieure (2) comprend un talon (5), une cambrure (4) et un patin avant (3). La semelle inférieure est constituée d'un élément périphérique (N1) disposé sur la périphérie de la cambrure du patin avant et du talon, d'un élément d'absorption des chocs (N4) disposé sur le milieu du talon entouré de l'élément périphérique (N1), d'un élément de grippage (N2) disposé au milieu de la cambrure de la semelle entouré de l'élément périphérique (N1) et d'un élément d'adhérence (N3) disposé sur le milieu du patin avant (3) et sur la cambrure (4) de la semelle. Ces quatre éléments sont solidairement fixés les uns aux autres par un procédé de vulcanisation décrit de manière plus détaillée dans la suite de la description. L'élément périphérique (N1), l'élément d'adhérence (N3) et l'élément d'absorption (N4) sont tous les trois composés d'une matière élastique de type caoutchouc nitrile. La matière élastique de chaque élément est de dureté différente. L'élément périphérique (N1) permet une grande stabilité de la chaussure et un bon maintien du pied sur le sol, la matière élastique de l'élément périphérique est donc de dureté supérieure, par exemple de 70shore. Cette matière élastique de forte dureté assure, également sur tout l'élément périphérique (N1), une résistance aux hydrocarbures, graisses, huile ainsi qu'une tenue à la chaleur pour la chaussure. L'élément d'absorption (N4) des chocs est constitué d'une matière élastique de faible dureté, par exemple de 65shore. Cet élément d'absorption (N4) permet d'absorber les chocs de façon progressive et d'assurer une adhérence optimale du talon (5) sur le sol. L'élément d'adhérence (N3) est constitué d'une matière élastique de faible dureté, par exemple de 60shore, et plus souple afin de privilégier au maximum une bonne adhérence de la semelle inférieure (2) sur tout type de sol et de revêtement. L'élément de grippage (N2) est également constitué d'une matière élastique, de type caoutchouc, et comporte au moins deux plots de crampons, non pointus. Dans le mode de réalisation présenté sur les figures 1A, 1B et 2 l'élément de grippage disposé au milieu de la cambrure de la semelle inférieure, comprend 8 crampons disposés symétriquement les uns des autres. Ces crampons sont séparés les uns des autres par une partie de l'élément d'adhérence. Ces crampons font saillie vers l'extérieur de la semelle (2) et sont en retrait par rapport à la surface formée par le talon (5) et le patin avant (3). L'élément de grippage (N2) permet au porteur de la chaussure de pouvoir monter sur les barreaux d'une échelle sans glisser, les crampons permettant d'adhérer aux barreaux de l'échelle.

En se référant à la figure 2, le patin avant (3) de la semelle comprend des motifs formés par des nervures transversales (30) espacées les unes des autres à égale distance et des nervures longitudinales (61) espacées les unes des autres à égale distance. Chaque extrémité des nervures (30, 31) est ouverte sur l'extérieure de la semelle inférieure (2). Chaque nervure forme un angle vif avec la semelle (2). Ces motifs permettent de favoriser l'évacuation du fluide tel que de l'eau, d'éviter son emprisonnement sous la chaussure pour obtenir une meilleure adhérence au sol. Les motifs disposés plus particulièrement au centre du patin c'est-à-dire les motifs de l'élément d'adhérence (N3), par leur forme et leur composition plus souple peuvent se déformer et épouser la surface en contact dans leur intégralité pour assurer une adhérence dans toutes les situations. Les motifs de l'élément périphérique (N1) sont en léger retrait par rapport aux motifs de l'élément d'adhérences (N3). Le talon (5) comprend en son milieu l'élément d'absorption (N4) entouré de l'élément périphérique de stabilité. L'élément d'absorption (N4) est en retrait par rapport à l'élément périphérique (N1). L'élément absorption (N4) est de forme rectangulaire et comprend des boudins transversaux (50). La partie de l'élément périphérique (N1) située au talon (5) comporte des plots rectangulaires (51, 52) placés à égale distance les uns des autres et de chaque côté de l'élément d'absorption. Le talon de par sa conception assure une stabilité extrême lors du déroulement de la marche et de l'attaque au sol de celui-ci. Les boudins de l'élément d'absorption (N4) viennent en contact avec le sol sous le poids de l'utilisateur.

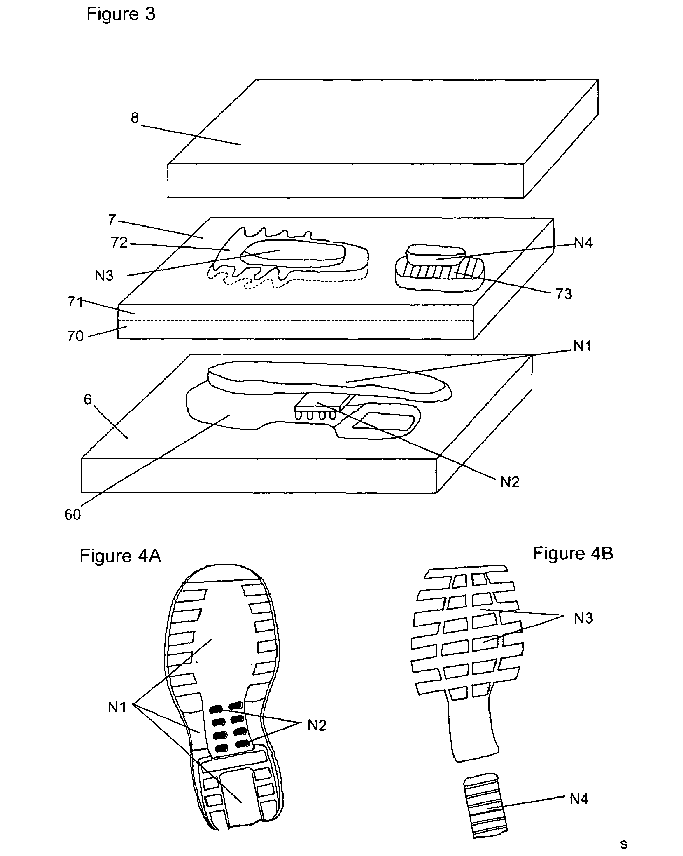

L'ensemble de moulage permettant de fabriquer la semelle inférieure de la présente invention va maintenant être présenté en relation avec la figure 3. L'ensemble de moulage comprend trois éléments distincts de forme et de taille surfacique égale. Le premier élément est un moule (6) qui comprend un évidement (60) en forme d'empreinte correspondant à la semelle inférieure et comportant un talon, une cambrure et un patin avant. Le deuxième élément est une grille (7) qui comprend une face supérieure (70) et une face inférieure (71), la face inférieure (71) étant en vis-à-vis de la face du moule (6) comportant l'évidement (60). La face supérieure (71) de la grille comprend un premier évidement (72) en forme d'empreinte correspondant à l'élément d'adhérence d'un patin avant de la semelle inférieure et un deuxième évidement (72) en forme d'empreinte correspondant à l'élément d'absorption de chocs du talon de la semelle inférieure. La face inférieure de la grille (70) comporte deux proéminences de forme identique aux évidements de la face supérieure. La proéminence correspondant à l'empreinte de l'élément d'adhérence est placée en vis-à-vis du milieu avant (patin) de l'empreinte formée dans l'évidement (60) du moule (6). La proéminence correspondant à l'empreinte de l'élément d'absorption est placée en vis-à-vis du milieu arrière (talon) de l'empreinte formée dans l'évidement (60) du moule (6). Ces deux proéminences permettent de former lors d'une pré-vulcanisation de la semelle inférieure les empreintes de l'élément d'adhérence et de l'élément d'absorption sur l'ébauche de matière élastique remplie dans l'évidement (60) du moule (6). Le troisième élément de l'ensemble de moulage est un couvercle (8) qui se superpose en position de fermeture, soit au-dessus de la face supérieure (71) de la grille (7) associée au moule (6), soit directement au-dessus du moule (6) selon l'étape du procédé de fabrication de la semelle.

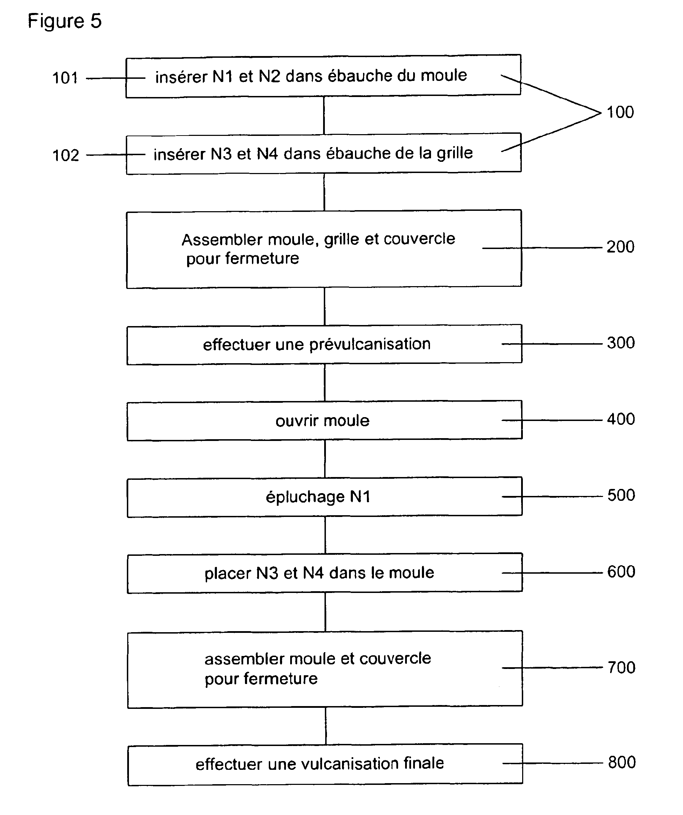

Ce procédé précédemment cité va maintenant être présenté en relation avec la figure 5. La première étape (100) du procédé de fabrication consiste au remplissage des ébauches de matière élastique flasque à mouler dans l'évidement du moule et dans les évidements de la face supérieure de la grille. Cette étape comporte plusieurs sous-étapes. Une première sous-étape (101) consiste en l'insertion dans l'évidement (60) du moule (6) de l'élément de grippage (N2) composé d'une plaque élastique rigidifiée et prédécoupée comportant sur sa face inférieure des crampons. La plaque est disposée dans la cambrure de l'empreinte correspondant à la semelle inférieure. La première sous-étape de remplissage (101) permet également d'insérer, toujours dans l'évidement (60) du moule, une ébauche de matière plastique flasque à mouler permettant de former, après pré-vulcanisation l'élément périphérique (N1) de la semelle inférieure (2). La matière élastique comme présentée ci-avant, est un caoutchouc nitrile comportant une composition permettant après vulcanisation d'être de forte dureté équivalente à 70 shore. A La deuxième sous-étape de remplissage (10), on insère dans le second évidement (72) de la grille (7), en forme d'une empreinte correspondant à l'élément d'adhérence, une ébauche de matière plastique flasque à mouler de type caoutchouc nitrile pour former après pré-vulcanisation l'élément d'adhérence au sol (N3) de plus faible dureté équivalente à 60 shore. Toujours en deuxième sous-étape de remplissage (102), on insère dans le deuxième évidement (73) de la grille (7) en forme d'une empreinte correspondant à l'élément d'absorption, une ébauche de matière plastique flasque à mouler de type caoutchouc nitrile pour former, après pré-vulcanisation, un élément d'absorption des chocs (N4) également de plus faible dureté équivalente à 65 shore. En deuxième étape du procédé (200), on ferme l'ensemble de moulage comportant le moule monté de la grille, elle-même, montée du couvercle. Lors de la fermeture de l'ensemble de moulage, les proéminences de la face inférieure de la grille s'insèrent dans l'ébauche de matière élastique flasque à mouler disposé dans l'évidement du moule pour former les empreintes de l'élément d'adhérence et de l'élément d'absorption sur l'élément périphérique. En troisième étape de procédé, on effectue une pré-vulcanisation de l'ensemble de moulage pour durcir l'élément d'adhérence, l'élément d'absorption et l'élément périphérique lié à l'élément de grippage. Cette pré-vulcanisation est réalisée dans un four à soufre. La figure 4A représente l'élément périphérique (N1) lié à l'élément de grippage (N2) après pré-vulcanisation. De même, la figure 4B représente l'élément d'adhérence (N3) et l'élément d'absorption (N4) après pré-vulcanisation. En quatrième étape (400), on ouvre l'ensemble de moulage. Puis en cinquième étape (500), on réalise un épluchage des évidements formés par les proéminences de la grille dans l'élément périphérique de la semelle inférieure rigidifiée après pré-vulcanisation. L'étape d'épluchage permet de gratter la matière élastique durcie formée, après l'étape de pré-vulcanisation, de l'élément périphérique de la semelle inférieure disposée dans l'évidement du moule. La matière élastique est grattée dans l'évidement formé sur le milieu du patin et se prolongeant sur le milieu de la cambrure entre les crampons de l'élément de grippage pour accueillir l'élément adhérent. La matière élastique est également grattée dans l'évidement formé sur milieu du talon pour accueillir l'élément d'absorption de chocs. Puis en sixième étape (600), on dispose l'élément d'adhérence rigidifié dans le premier évidement de la grille lors de la pré-vulcanisation, dans l'évidement formé sur le milieu de l'élément périphérique disposé dans l'évidement du moule. Et on dispose l'élément d'absorption rigidifié dans le deuxième évidement de la grille lors de la pré-vulcanisation, dans l'évidement épluché formé sur le milieu arrière de l'élément périphérique. En septième étape (700) du procédé, on ferme le couvercle de l'ensemble de moulage sur le moule. Enfin, en huitième et dernière étape du procédé de fabrication, on réalise une vulcanisation de l'ensemble de moulage pour lier l'élément périphérique, l'élément de grippage, l'élément d'absorption des chocs et l'élément d'adhérence ensemble. Cette étape est réalisée dans un four à soufre.

## Revendications

1. Semelle de chaussure (1) comportant une semelle inférieure (2) et une semelle supérieure (10), la semelle supérieure (10) étant une semelle de confort, la semelle inférieure (2) comportant un talon (5), une cambrure (4) et un patin avant (3), la semelle tel que la semelle inférieure (2) comprend :
- un élément périphérique (N1) de grande stabilité et de maintien du pied disposé sur la périphérie de la cambrure (4), du patin avant (3) et du talon (5),
- un élément d'absorption des chocs (N4) disposé dans un évidement formé sur le milieu du talon (5) entouré de l'élément périphérique (N1),
- un élément de grippage (N2) disposé dans un évidement formé sur le milieu de la cambrure (4) de la semelle, et entouré de l'élément périphérique (N1), et
- un élément d'adhérence (N3) assurant l'adhérence au sol disposé sur le milieu du patin avant (3) et entre les crampons de la cambrure (4) de la semelle inférieure (2),
ces quatre éléments étant solidairement liés les uns aux autres par un procédé de vulcanisation.

2. Semelle de chaussure selon la revendication 1, **caractérisée en ce que** l'élément périphérique (N1), l'élément d'adhérence (N3) et l'élément d'absorption (N4) sont chacun constitué d'une matière élastique, de type caoutchouc nitrile, de dureté différente.

3. Semelle de chaussure selon la revendication 1 ou 2, **caractérisée en ce que** l'élément périphérique (N1) est constitué d'une matière élastique, de type caoutchouc nitrile, de dureté supérieure proche de 70shore.

4. Semelle de chaussure selon une des revendications 1 à 3, **caractérisée en ce que** l'élément d'adhérence (N3) est constitué d'une matière élastique, de type caoutchouc nitrile, de faible dureté proche de 60shore, permettant une bonne adhérence de la semelle sur tout type de sols et de revêtement.

5. Semelle de chaussure (1) selon une des revendications 1 à 4, **caractérisée en ce que** l'élément d'absorption (N4) est constitué d'une matière élastique, de type CIC nitriles, de faible dureté proche de 65shore.

6. Semelle de chaussure (1) selon une des revendications 1 à 5, **caractérisée en ce que** élément de grippage (N2) est constitué d'une matière élastique de type caoutchouc.

7. Semelle de chaussure (1) selon une des revendications 1 à 6, **caractérisée en ce que** le patin avant (3) comprend des motifs engendrés par des nervures transversales (30) espacées les unes des autres à égale distance et des nervures longitudinales (31) espacées les unes des autres à égale distance, chaque extrémité des nervures étant ouverte sur l'extérieur de la semelle inférieure (2) et chaque nervure formant des angles vifs avec la semelle inférieure (2) permettant d'éviter d'emmagasiner du fluide afin de mieux adhérer au sol.

8. Semelle de chaussure (1) selon une des revendications 1 à 7, **caractérisée en ce que** le milieu de la cambrure (4) de la semelle inférieure (2) comporte l'élément de grippage (N2) comportant au moins deux plots de crampons faisant saillie vers l'extérieur de la chaussure (1), en retrait du talon (5) et du patin avant (3) de la semelle inférieure (2).

9. Semelle de chaussure selon une des revendications 1 à 8, **caractérisée en ce que** le talon (5) comprend l'élément absorption (N4) entouré de l'élément périphérique (N1) de la semelle inférieure (2), l'élément absorption (N4) comportant des boudins transversaux (50) en retrait par rapport à l'élément périphérique (N1) qui comporte, lui, des plots rectangulaires (51, 52) placés à égale distance les uns des autres et de chaque côté de l'élément d'absorption (N4).

10. Procédé de fabrication d'une semelle inférieure (2) de chaussure (1), à partir d'un ensemble de moulage comportant un moule (6), une grille (7) et un couvercle (8), le procédé étant tel qu'il comprend les étapes suivantes :
- Remplissage (100) des différents évidements (72, 73, 60) d'une ébauche de matière élastique flasque à mouler de type caoutchouc les ébauches étant de matière identique, mais de composition adéquate différente,
- fermeture de l'ensemble de moulage (200) comportant le moule (6), la grille (7) et le couvercle (8),
- pré-vulcanisation de l'ensemble de moulage (300) pour former les éléments principaux de la semelle inférieure (2),
- ouverture de l'ensemble de moulage (400),
- épluchage (500) d'évidements centraux formés sur un élément périphérique (N1) de la semelle inférieure (2) formée après l'étape de pré-vulcanisation (300) dans l'évidement du moule, et mise en place (600) d'un élément d'adhérence (N3) et d'un élément d'absorption (N4), dans les évidements épluchés de l'élément périphérique (N1) inséré dans l'évidement du moule (6), l'élément d'adhérence (N3) et l'élément d'absorption étant formés dans les évidements de la grille lors de la pré-vulcanisation (300),
- fermeture de l'ensemble de moulage (700) constitué du couvercle (8) et du moule (6) dont l'évidement de ce dernier comporte l'élément de grippage (N2), l'élément périphérique (N1), l'élément d'adhérence (N3) et l'élément d'absorption (N4),
- vulcanisation (800) de l'ensemble de moulage pour fixer l'élément périphérique (N1), l'élément de grippage (N2), l'élément d'absorption des chocs (N4) et l'élément d'adhérence ensemble (N3).

11. Procédé de fabrication d'une semelle inférieure (2) de chaussure (1) selon la revendication 10 **caractérisé en ce que** l'étape de remplissage (100) des différents évidements (72, 73, 60) de l'ensemble de moulage comprend les étapes suivantes :
- (101) insertion dans un évidement (60) du moule (6), étant en forme d'empreinte correspondant à la semelle inférieure, de l'élément de grippage constitué d'une plaque prédécoupée comportant sur sa face inférieure des crampons et disposée au niveau de la cambrure de l'empreinte et remplissage insertion dans ledit évidement (60) d'une ébauche de matière élastique flasque à mouler pour former après pré-vulcanisation, l'élément périphérique (N1) de la semelle inférieure (2) ayant une forte dureté,
- (102) remplissage dans un premier évidement (72) de la grille (7), étant en forme d'empreinte correspondant à l'élément d'adhérence du patin avant de la semelle inférieure, d'une ébauche de matière élastique flasque à mouler pour former, après pré-vulcanisation, un élément d'adhérence (N3) au sol ayant une faible dureté et remplissage dans un deuxième évidement (73) de la grille (7), étant en forme d'une empreinte correspondant à l'élément d'absorption de chocs du talon de la semelle inférieure, d'une ébauche de matière élastique flasque à mouler pour former, après pré-vulcanisation, un élément d'absorption des chocs (N4) de faible dureté.

12. Procédé de fabrication d'une semelle inférieure (2) de chaussure (1) selon la revendication 10 **caractérisé en ce que** l'étape d'épluchage (500) permet de gratter la matière élastique formée, après l'étape de pré-vulcanisation (300), de l'élément périphérique (N1) de la semelle inférieure (2) disposée dans le premier évidement (60) du moule (6), la matière élastique étant grattée sur la zone placée au milieu du patin (3) et au milieu de la cambrure (4) entre des crampons de l'élément de grippage pour ensuite accueillir l'élément d'adhérence (N3) de la semelle inférieure (2) et sur la zone placée au milieu du talon (5) pour ensuite accueillir l'élément d'absorption (N4) de la semelle inférieure (2).

13. Procédé de fabrication d'une semelle inférieure (2) de chaussure (1) selon la revendication 10 **caractérisé en ce que** l'étape de mise en place (600) des éléments (N4, N3) de la grille (7) dans les zones épluchées du moule (6) comprend les étapes suivantes :
- déplacement de l'élément d'adhérence (N3) du premier évidement (72) de la grille (7) vers un premier évidement formé sur l'élément périphérique, ledit élément étant inséré dans le moule, l'évidement correspondant au milieu du patin (3) et se prolongeant sur le milieu de la cambrure (4) entre les crampons de l'élément de grippage (N2), et
- déplacement de l'élément d'absorption (N4) du deuxième évidement (73) de la grille (7) vers un deuxième évidement formé sur l'élément périphérique, ledit élément étant inséré dans le moule, le deuxième évidement formé sur l'élément périphérique correspondant au milieu du talon (5).

## Claims

1. Shoe sole (1) including a lower sole (2) and an upper sole (10), the upper sole (10) being a comfort sole, the lower sole (2) including a heel (5), an arch (4) and a front pad (3), such that the lower sole (2) comprises:
- a peripheral element (N1) with high stability for holding the foot disposed on the periphery of the arch (4), the front pad (3) and the heel (5),
- a shock-absorbing element (N4) disposed in a recess formed on the middle of the heel (5) surrounded by the peripheral element (N1),
- a scuffing element (N2) disposed in the recess formed on the middle of the arch (4) of the sole, and surrounded by the peripheral element (N1),
- a gripping element (N3) ensuring the grip on the ground disposed of the middle of the front pad (3) and between the protrusions oaf the arch (4) of the lower sole (2),
these four elements being joined to one another by a vulcanisation process.

2. Shoe sole as claimed in Claim 1, **characterised in that** the peripheral element (N1), the gripping element (N3) and the shock-absorbing element (N4) are each made from an elastic material, of the nitrile rubber type, of differing hardness.

3. Shoe sole as claimed in Claim 1 or Claim 2, **characterised in that** the peripheral element (N1) is made from an elastic material, of the nitrile rubber type, having a greater hardness close to 70 Shore.

4. Shoe sole as claimed in any one of Claims 1 to 3, **characterised in that** the gripping element (N3) is made from an elastic material, of the nitrile rubber type, having a low hardness close to 60 Shore, enabling a good grip of the sole on any type of ground and covering.

5. Shoe sole (1) as claimed in any one of Claims 1 to 4, **characterised in that** the absorption element (N4) is made from an elastic material, of the C/C nitrile type, having a low hardness close to 65 Shore.

6. Shoe sole (1) as claimed in any one of Claims 1 to 5, **characterised in that** the scuffing element (N2) is made from an elastic material of the rubber type.

7. Shoe sole (1) as claimed in any one of Claims 1 to 6, **characterised in that** the front pad (3) comprises patterns created by transverse ribs (30) spaced apart from one another equidistantly and longitudinal ribs (31) spaced apart from one another equidistantly, each end of the ribs being open to the exterior of the lower sole (2) and each rib forming sharp angles with the lower sole (2) making it possible to avoid the accumulation or fluid in order to improve grip on the ground.

8. Shoe sole (1) as claimed in any one of Claims 1 to 7, **characterised in that** the middle of the arch (4) of the lower sole (2) includes the scuffing element (N2) including at least two studs projecting towards the exterior of the shoe (1), set back from the heel (5) and the front pad (3) of the lower sole (2).

9. Shoe sole as claimed in any one or Claims 1 to 8, **characterised in that** the heel (5) comprises the shock-absorbing element (N4) surrounded by the peripheral element (N1) of the lower sole (2), the shock-absorbing element (N4) including transverse beads (50) set back with respect to the peripheral element (N1) which itself includes rectangular studs (51, 52) spaced apart from one another equidistantly and on each side of the shock-absorbing element (N4).

10. Method of manufacture of a lower sole (2) of a shoe (1), using a moulding assembly including a mould (6), a mesh (7) and a cover (8), the method being such that it comprises the following steps:
- filling (100) of the different recesses (72, 73, 60) of a preform made from elastic web material for moulding of the rubber type, the preforms being made from identical materials but of differing appropriate compositions,
- closure of the moulding assembly (200) including the mould (6), the mesh (7) and the cover (8),
- pre-vulcanisation of the moulding assembly (300) in order to form the principal elements of the lower sole (2),
- opening of the moulding assembly (400),
- trimming (500) of central recesses formed on a peripheral element (N1) of the lower sole (2) formed after the pre-vulcanisation step (300) in the cavity of the mould, and positioning (600) of a gripping element (N3) and a shock-absorbing element (N4) in the trimmed recesses of the peripheral element (N1) inserted into the cavity of the mould (6), the gripping element (N3) and the shock-absorbing element being formed in the recesses in the mesh during the pre-vulcanisation (300),
- closure of the mould assembly (700) consisting of the cover (8) and the mould (6), of which the cavity includes the scuffing element (N2), the peripheral element (N1), the gripping element (N3) and the shock-absorbing element (N4),
- vulcanisation (800) of the moulding assembly in order to fix the peripheral element (N1), the scuffing element (N2), the shock-absorbing element (N4) and the gripping element (N3).

11. Method of manufacture of a lower sole (2) of a shoe (1) as claimed in Claim 1, **characterised in that** the step of filling (100) of the different, cavities (72, 73, 60) of the moulding assembly comprises the following steps:
- (101) insertion into a cavity (60) of the mould (6), which is in the form of an impression corresponding to the lower sole, of the scuffing element composed of a pre-cut sheet having protrusions on its lower face and disposed at the level of the arch of the impression, and filling/insertion into the said cavity (60) of a preform of elastic web material for moulding in order to form, after pre-vulcanisation, the peripheral element (N1) of the lower sole (2) having a high hardness,
- (102) filling into a first recess (72) of the mesh (7), in the form of an impression corresponding to the gripping element of the front pad of the lower sole, of a preform of elastic web material for moulding in order to form, after pre-vulcanisation, an element (N3) for grip on the ground having a low hardness and filling into a second recess (73) of the mesh (7), in the form or an impression corresponding to the shock-adsorbing element of the heel of the lower sole, of a preform of elastic web material for moulding in order to form, after pre-vulcanisation, a shock-absorbing element (N4) having a low hardness.

12. Method of manufacture of a lower sole (2) of a shoe (1) as claimed in Claim 10, **characterised in that** the step of trimming (500) enables scraping of the elastic material formed, after the pre-vulcanisation step (300), of the peripheral element (N1) of the lower sole (2) disposed in the first cavity (60) of the mould (6), the elastic material being scraped on the zone placed in the middle of the pad (3) and in the middle of the arch (4) between protrusions of the scuffing element in order then to receive the gripping element (N3) of the lower sole (2) and on the zone placed in the middle of the heel (5) in order then to receive the shock-absorbing element (N4) of the lower sole (2).

13. Method of manufacture of a lower sole (2) of a shoe (1) as claimed in Claim 10, **characterised in that** the step or positioning (600) of the elements (N4, N3) of the mesh (7) in the trimmed zones of the mould (6) comprises the following steps:
- displacement of the gripping element (N3) from the first recess (72) of the mesh (7) towards a first recess formed on the peripheral element, the said element being inserted in the mould, the recess corresponding to the middle of the pad (3) and extending over the middle of the arch (4) between the protrusions of the scuffing element (N2), and
- displacement of the shock-absorbing element (N4) of the second recess (73) of the mesh (7) towards a second recess formed own the peripheral element, the said element being inserted into the mould, the second recess formed on the peripheral elements corresponding to the middle of the heel (5).

## Patentansprüche

1. Schuhsohle (1), aufweisend eine untere Sohle (2) und eine obere Sohle (10), wobei die obere Sohle (10) eine Komfortsohle ist, wobei die untere Sohle (2) einen Absatz (5), ein Gelenkstück (4) und eine vordere Laufsohle (3) aufweist, wobei die Sohle, wie die untere Sohle (2), aufweist:
- ein Peripherelement (N1) mit hoher Stabilität und Halt für den Fuß, das an der Peripherie des Gelenkstücks (4), der vorderen Laufsohle (3) und des Absatzes (5) angeordnet ist,
- ein Stoßdämpfungselement (N4), das in einer Aussparung angeordnet ist, die in der Mitte des Absatzes (5) umgeben von dem Peripherelement (N1) ausgebildet ist,
- ein Eingriff-Element (N2), das in einer Aussparung angeordnet ist, die in der Mitte des Gelenkstücks (4) der Sohle ausgebildet ist und von dem Peripherelement (N1) umgeben ist,
- ein Haltelement (N3), welches das Haften am Boden sicherstellt, das in der Mitte der vorderen Laufsohle (3) und zwischen den Stollen des Gelenkstücks (4) der unteren Sohle (2) angeordnet ist,
wobei die vier Elemente durch ein Vulkanisierungsverfahren einstückig miteinander verbunden sind.

2. Schuhsohle gemäß Anspruch 1, **dadurch gekennzeichnet, dass** das Peripherelement (N1), das Haftelement (N3) und das Dämpfungselement (N4) jeweils aus einem elastischen Material des Nitrilkautschuktyps mit unterschiedlicher Härte ausgebildet sind.

3. Schuhsohle gemäß Anspruch 1 oder 2, **dadurch gekennzeichnet, dass** das Peripherelement (N1) aus einem elastischen Material des Nitrilkautschuktyps mit einer größeren Härte von annähernd 70 Shore ausgebildet ist.

4. Schuhsohle gemäß einem der Ansprüche 1 bis 3, **dadurch gekennzeichnet, dass** das Haftelement (N3) aus einem elastischen Material des Nitrilkautschuktyps mit einer geringen Härte von annähernd 60 Shore ausbildet ist, wodurch ein gutes Haften der Sohle an jeder Art von Boden und Auflage ermöglicht wird.

5. Schuhsohle (1) gemäß einem der Ansprüche 1 bis 4, **dadurch gekennzeichnet, dass** das Dämpfungselement (N4) aus einem elastischen Material des C/C-Nitril-Typs mit einer geringen Härte von annähernd 65 Shore ausgebildet ist.

6. Schuhsohle (1) gemäß einem der Ansprüche 1 bis 5, **dadurch gekennzeichnet, dass** das Eingriff-Element (N2) aus einem elastischen Material des Kautschuktyps gebildet ist.

7. Schuhsohle (1) gemäß einem der Ansprüche 1 bis 6, **dadurch gekennzeichnet, dass** die vordere Laufsohle (3) Muster aufweist, die durch in gleichem Abstand voneinander angeordnete querverlaufende Rippen (30) und durch in gleichem Abstand voneinander angeordnete längsverlaufende Rippen (31) erzeugt werden, wobei jedes Ende der Rippen zum Äußeren der unteren Sohle (2) hin offen ist und jede Rippe mit der unteren Sohle (2) scharfe Kanten ausbildet, die ein Verhindern des Einlagerns von Fluid ermöglichen, um besser am Boden zu haften.

8. Schuhsohle (1) gemäß einem der Ansprüche 1 bis 7, **dadurch gekennzeichnet, dass** die Mitte des Gelenkstücks (4) der unteren Sohle (2) das Eingriff-Element (N2) aufweist, das mindestens zwei von dem Schuh (1) nach außen hervorstehende Stollenblöcke aufweist und von dem Absatz (5) und der vorderen Laufsohle (3) der unteren Sohle (2) eingerückt ist.

9. Schuhsohle gemäß einem der Ansprüche 1 bis 8, **dadurch gekennzeichnet, dass** der Absatz (5) das von dem Peripherelement (N1) der unteren Sohle (2) umgebene Dämpfungselement (N4) aufweist, wobei das Dämpfungselement (N4) relativ zu dem Peripherelement (N1) zurückgezogen querverlaufende Wülste (50) aufweist, das seinerseits rechteckige Blöcke (51, 52) aufweist, die in gleichem Abstand voneinander und auf jeder Seite des Dämpfungselements (N4) angeordnet sind.

10. Verfahren zum Herstellen einer unteren Sohle (2) für eine Schuhsohle (1) ausgehend von einem Formungssatz, der eine Form (6), ein Gitter (7) und einen Deckel (8) aufweist, wobei das Verfahren derart ist, dass es die folgenden Schritte aufweist:
- Füllen (100) der verschiedenen Aussparungen (72, 73, 60) mit einem Formling aus zu formendem weichem elastischem Material des Kautschuktyps, wobei die Formlinge aus gleichem Material, jedoch aus einer unterschiedlichen passenden Zusammensetzung sind,
- Schließen (200) des Formungssatzes, der die Form (6), das Gitter (7) und den Deckel (8) aufweist,
- Vorvulkanisieren (300) des Formungssatzes, um die Hauptelemente der unteren Sohle (2) zu formen,
- Öffnen des Formungssatzes (400),
- Reinigen (500) von auf einem Peripherelement (N1) der unteren Sohle (2) ausgebildeten zentralen Aussparungen, die nach dem Schritt des Vorvulkanisierens (300) in der Aussparung der Form geformt wird, und Einbringen (600) eines Haftelemente (N3) und eines Dämpfungselements (N4) in die gereinigten Aussparungen des in die Aussparung der Form (6) eingesetzte Peripherelements (N₁), wobei das Haftelement (N3) und das Dämpfungselement während des Vorvulkanisierens (300) in den Aussparungen des Gitters geformt werden,
- Schließen des Formungssatzes (700), der aus dem Deckel (8) und der Form (6) gebildet ist, wobei die Aussparung von letzterer das Eingriff-Element (N2), das Peripherelement (N1), das Haftelement (N3) und das Dämpfungselement (N4) aufweist,
- Vulkanisieren (800) des Formungssatzes, um das Peripherelement (N1), das Eingriff-Element (N2), das Stoßdämpfungselement (N4) und das Haltelement (N3) aneinander zu befestigen.

11. Verfahren zum Herstellen einer unteren Sohle (2) für eine Schuhsohle (1) gemäß Anspruch 10, **dadurch gekennzeichnet, dass** der Schritt des Füllens (100) der verschiedenen Aussparungen (72, 73, 60) des Formungssatzes die folgenden Schritte aufweist:
- (101) Einsetzen des Eingriff-Elements, das aus einer vorgeschnittenen Platte gebildet ist, die auf ihrer unteren Seite Stollen aufweiset und auf Höhe des Gelenkstücks der Matrize angeordnet ist, in eine Aussparung (60) der Form (6), die die Form einer mit der unteren Sohle korrespondierenden Matrize hat, und Einsetz-Füllen eines Formlings aus zu formendem weichem elastischem Material in die Aussparung (60), um nach dem Vorvulkanisieren das Peripherelement (N1) der unteren Sohle (2) mit einer hohen Härte zu formen,
- (102) Füllen eines Formlings aus zu formendem weichem elastischem Material in eine erste Aussparung (72) des Gitters (7), die die Form einer mit dem Haftelement der vorderen Laufsohle der unteren Sohle korrespondierenden Matrize hat, um nach dem Vorvulkanisieren ein Element zum Haften (N3) am Boden mit einer geringen Härte zu formen, und Füllen eines Formlings aus zu formendem weichem elastischem Material in eine zweite Aussparung (73) des Gitters (7), die die Form einer mit dem Stoßdämpfungselement des Absatzes der unteren Sohle korrespondierenden Matrize hat, um nach dem Vorvulkanisieren ein Stoßdämpfungselement (N4) mit geringer Härte auszubilden.

12. Verfahren zum Herstellen einer unteren Sohle (2) für eine Schuhsohle (1) gemäß Anspruch 10, **dadurch gekennzeichnet, dass** der Schritt des Reinigens (500) nach dem Schritt des Vorvulkanisierens (300) ein Abschaben des in der ersten Aussparung (60) der Form (6) angeordneten geformten elastischen Materials des Peripherelements (N1) der unteren Sohle (2) ermöglicht, wobei das elastische Material in dem Bereich abgeschabt wird, der in der Mitte der Laufsohle (3) und in der Mitte des Gelenkstücks (4) zwischen Stollen des Eingriff-Elements angeordnet ist, um anschließend das Haftelement (N3) der unteren Sohle (2) aufzunehmen, sowie in dem Bereich abgeschabt wird, der in der Mitte des Absatzes (5) positioniert ist, um anschließend das Dämpfungselement (N4) der unteren Sohle (2) aufzunehmen.

13. Verfahren zum Herstellen einer unteren Sohle (2) für eine Schuhsohle (1) gemäß Anspruch 10, **dadurch gekennzeichnet, dass** der Schritt des Einbringens (600) der Elemente (N4, N3) des Gitters (7) in die gereinigten Bereiche der Form (6) die folgenden Schritte aufweist:
- Bewegen des Haftelements (N3) aus der ersten Aussparung (72) des Gitters (7) in Richtung zu einer ersten Aussparung, die auf dem Peripherelement ausgebildet ist, wobei das Element in die Form eingesetzt ist, wobei die Aussparung mit der Mitte der Laufsohle (3) korrespondiert und sich in der Mitte des Gelenkstücks (4) zwischen den Stollen des Eingriff-Elements (N2) erstreckt, und
- Bewegen des Dämpfungselements (N4) aus der zweiten Aussparung (73) des Gitters (7) in Richtung zu einer zweiten Aussparung, die auf dem Peripherelement ausgebildet ist, wobei das Element in die Form eingesetzt ist, wobei die zweite Aussparung auf dem Peripherelement ausgebildet ist, das mit der Mitte des Absatzes (5) korrespondiert.
